# EUROPEAN PATENT APPLICATION

(11) **EP 1 921 372 A1**
(43) Date of publication of application: **14.05.2008**
(21) Application number: 06023503.3
(22) Date of filing: 11.11.2006
(51) Int. Cl.: F17C 5/00, F17C 13/02

(54) **Storage system**

(71) Applicant: GM Global Technology Operations, Inc., Detroit, MI 48265-3000 (US)
(72) Inventor: Hermann, Ingo, 55116 Mainz (DE); Zörner, Björn, 65468 Trebur (DE)
(74) Representative: Strauss, Peter

(57) **Abstract**

The invention relates to a filling station (1) for filling a cryogenic liquid (3) into a storage system (5) by means of a feed pump (2). The filling station has a data processing system (11) which is adapted to dynamically adjust the output pressure of the feed pump.

Other aspects of the invention refer to a method of filling a storage system (5) with a cryogenic liquid (3), a computer program which carries out this method and an electromagnetic signal carrying such a computer program.

## Description

The invention relates to storage systems for cryogenic liquids and to filling stations for filling such storage systems.

Cryogenic liquids are liquefied gases such as liquid hydrogen, nitrogen or oxygen or other liquids having a boiling point far below room temperature. For the description which follows it may be assumed, that the boiling temperature of cryogenic liquids is below (-) 100°C.

Cryogenic liquids are obtained in industrial processes and are stored in large storage containers, from which they are transferred into smaller storage systems or vessels for an easier use. Such a transfer is in most cases accompanied by significant losses because the pipes connecting the storage container and the storage system as well as the storage system itself need to be cooled down. During the cool-down period of these components a significant portion of the cryogenic liquid is evaporated and is released into the atmosphere.

It is an object of an embodiment of the invention to provide a filling station for filling a storage system with a cryogenic liquid which has reduced losses during the filling process.

An object of another embodiment of the invention is to provide a method for filling a storage system with a cryogenic liquid which is carried out with reduced losses during the filling process.

An object of other embodiments of the invention is to provide a computer program, an electromagnetic signal carrying such a computer program and a computer program product for carrying out the method mentioned in the last paragraph.

These objects and other objects are solved by the features of the independent claims. Further embodiments are described by the sub-claims.

A first aspect of the invention relates to a filling station for filling a cryogenic liquid into a storage system by means of a feed pump. In a first embodiment the filling station comprises a data processing system which is adapted to dynamically adjust the output pressure of the feed pump.

The filling station according to this embodiment uses a feed pump, e.g. a cryo pump. The feed pump has an output pressure which is set to the release pressure minus a safety margin. The release pressure is the pressure at which a release valve of the storage system opens for security reasons. Two aspects contribute to the value of the safety margin. The major contribution is the gas pressure within the storage system during a filling process. This pressure increase largely depends on the architecture of the storage system. It has to be determined experimentally in order to avoid that the release valve opens during a filling process. A minor contribution is the accuracy of the release pressure value as specified by the manufacturer. In total, the safety margin will be chosen to be at least the sum of the pressure increase and said accuracy.

Choosing this output pressure leads to a turbulent flow within the pipe connecting the filling station with the storage system. A much higher mass flow of cryogenic liquid is the consequence. This leads to a shorter transport time of cryogenic liquid to the storage system. The high pressure of the cryogenic liquid serves as buffer for friction losses. Less evaporation is the consequence.

Furthermore, when arriving at the storage system the cryogenic liquid is able to condense a significant amount of gas i.e. evaporated cryogenic liquid within the storage system. Although a cryogenic liquid will always condense a certain amount of gas in the storage system, this amount is significantly increased when the output pressure is chosen as described above. The turbulent flow increases the "cold" heat transfer from the incoming liquid to the gaseous in tank cryogenics. The reason for this is as follows. When arriving at the storage system the cryogenic liquid is in a thermodynamically unstable state. It has a pressure which is higher than in the thermodynamically stable state (= equilibrium), the latter being found in the cryogenic liquid storage container from which the filling station gets its cryogenic liquid. Furthermore, it has a temperature being equal to the equilibrium temperature. The higher pressure is reached by the cryogenic pump. The thermodynamic state thus reached will be called "sub-cooled" in the following. A sub-cooled cryogenic liquid is however very efficient when condensing gas within the storage system because it is cooler than the storage tank temperature. On balance, much less cryogenic liquid is evaporated and is thus released into the atmosphere.

The data processing system is adapted to dynamically adjust the output pressure of the feed pump. In this way the filling process can be tailored to the individual storage system as different storage systems may have different release pressures.

In a second embodiment the data processing system is adapted to request the release pressure of the storage system and/or measurement values from the storage system. The release pressure and/or other measurement values will be called "information" for sake of simplicity. Requesting this information is done by sending an appropriate request signal via a data interface to the storage system and receiving the data via this data interface. In this case a bidirectional data connection is used. In other cases the storage system will initiate the transfer of the data itself, e.g. because it has learned in some other way that there is a filling process under way. This might be the case because there is an active coupling, e.g. a Johnston-Cox coupling, between the storage system and the filling station.

After reception of the information the data processing system has to process the information. Accordingly, another embodiment suggests that the data processing system is adapted to control the output pressure of the feed pump in response to measurement values received from the storage system.

As will be derived from the above description the amount of evaporated cryogenic liquid outputted into the atmosphere can be reduced by the steps disclosed above. Outputting itself is performed by a return gas valve located in the filling station. However, even if the amount of evaporated cryogenic liquid is reduced it still builds up a certain pressure, and pressure compensation is accomplished by the return gas valve. Depending on the progress in avoiding evaporation it may be sufficient to choose a smaller flow rate through the release valve. In other cases it may even be possible to close the return gas valve completely if the gas pressure is below a threshold value. For that purpose a dynamically adjustable return gas valve for releasing evaporated cryogenic liquid into the atmosphere should be chosen.

According to another embodiment the data processing system is adapted to control the flow rate through the return gas valve in response to measurement values received from the storage system. In this case the data obtained from the storage system can be used to minimize the amount of gas released from the filling station via a control loop. As a matter of fact, a data processing system may be chosen which controls the output pressure of the pump and said flow rate at the same time, both in response to the measurement values.

In still another embodiment the data processing system is adapted to control the output pressure of the feed pump and/or the flow rate through the return gas valve in response to the filling level of the cryogenic liquid and the gas pressure in the storage system.

Experiments have shown that it is possible to reduce the amount of gas which has to be released into the atmosphere to values clearly below 10 % of usable cryogenic mass in the storage tank. This makes it feasible to choose a filling station which comprises a storage container for storing the cryogenic liquid and a return gas pipe connecting the filling station with the storage container. The gas in the storage system is then returned via the return gas pipe to the storage container such that there are no losses through the release valve at all. As a matter of fact the returned gas will warm up the cryogenic liquid in the storage container to some extent. However, as the amount of gas admitted to the storage container is small this temperature increase can be managed easily.

As will be derived from the explanations given above the invention can be carried out in all cases when a cryogenic liquid needs to be transferred into a storage system, a process during which a certain amount of liquid is evaporated. It can thus be used for applications where industrial gases of liquid type need to be transferred into other vessels. Examples for such cryogenic liquids are liquid hydrogen, liquid nitrogen or liquid helium. In that respect the filling station may be adapted to refuel the storage system of a motor vehicle, e.g. a passenger car. In the latter case the storage system is the tank which is refuelled with liquid hydrogen.

Another aspect of the invention relates to a method of filling a storage system with a cryogenic liquid. The method comprises a first step of adjusting the feed pump to an output pressure which is equal to a release pressure of a release valve of a storage system to be filled minus a safety margin. In a second step a cryogenic liquid is pumped into the storage system by means of said feed pump. As described above, choosing such an output pressure reduces gas losses into the atmosphere because the sub-cooled cryogenic liquid effectively condenses gas in the storage system.

Adjusting the output pressure of the feed pump can be carried out dynamically. In this case carrying out the method is tailored to the individual storage system.

In an embodiment the method further comprises the step of requesting and/or receiving the release pressure and/or measurement values from the storage system. Requesting and/or receiving the release pressure will be done at the start of the filling process in order to adjust the output pressure. Measurement values will be obtained online during a filling process.

In another embodiment the method comprises the step of controlling the output pressure of the feed pump in response to measurement values received from the storage system. In this way the flow of the cryogenic liquid to the storage system is controlled which ensures a safe handling of the filling process for each storage system. Furthermore, the dynamic adjustment of the output pressure in a control loop, i.e. in response to measurement values which represent storage system parameters, makes it possible to work at a gas pressure particularly close to the release pressure without the risk of an unwanted opening of the release valve. In this way the pressure losses of the sub-cooled cryogenic liquid are low and "cold" heat transfer is high via turbulent mass flow such that the condensation of gas reaches a maximum.

Furthermore it is suggested, that the flow rate through a return gas valve of a filling station is controlled, whereby the return gas valve serves for releasing evaporated cryogenic liquid into the atmosphere. This control and/or the control of the feed pump as mentioned in the last paragraph can be accomplished by the data processing system of the filling station.

More specifically it is suggested, that controlling the output pressure of the feed pump and/or controlling the flow rate through the return gas valve is carried out in response to the gas pressure and the filling level in the storage system. In this way the amount of gas which has to be released through the return gas valve can be reduced to a few percent of the storage tank's usable mass.

With the small amount of gas, which cannot be condensed by the embodiments disclosed above it is feasible to conduct the cryogenic liquid which has evaporated in the storage system to a storage container for storing the cryogenic liquid. This is done by providing an insulated gas passage, e.g. a pipe or duct, from the filling station to the storage container, e.g. via the filling station. In this way there are no losses of gas at all, making the filling process particularly cheap.

As can be derived from the above description, the method can be used to fill the storage system with cryogenic liquids such as liquid hydrogen, liquid nitrogen or liquid helium.

The method disclosed above can be realized in hardware, software, or a combination of hardware and software. Any kind of computer system - or other apparatus adapted for carrying out the methods described herein - is suited. A typical combination of hardware and software could be a general-purpose computer system with a computer program that, when being loaded and executed, controls the computer system such that it carries out the method described herein. The present invention can also be embedded in a computer program product, which comprises all the features enabling the implementation of the method described herein, and which - when being loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

As it is common in the area of telecommunication, the computer program might be transmitted by an electromagnetic signal via the air interface or via cables, e.g. Ethernet cables. This signal, which might be transmitted in a network, e.g. the internet, is digitally modulated, e.g. by OFDM modulation, to carry digital data representing said computer program.

These and other aspects of the claimed invention will be apparent from and elucidated with reference to the embodiments described thereafter, whereby reference is made to the accompanying drawings. It should be understood that the use of reference signs in the drawings shall not be understood as limiting the scope of the claimed invention.
- Fig. 1: shows a system for filling a storage system with a cryogenic liquid according to an embodiment of the invention,
- Fig. 2: shows measurement values taken during a filling process when carried out without making use of the present invention,
- Fig. 3: shows measurement values taken during an embodiment of the invention,
- Fig. 4: shows measurement values taken during another embodiment of the invention,
- Fig. 5: shows a system for filling a storage system with a cryogenic liquid according to an embodiment of the invention,
- Fig. 6: shows a flowchart illustrating the way an embodiment of the method according to the invention may be carried out.

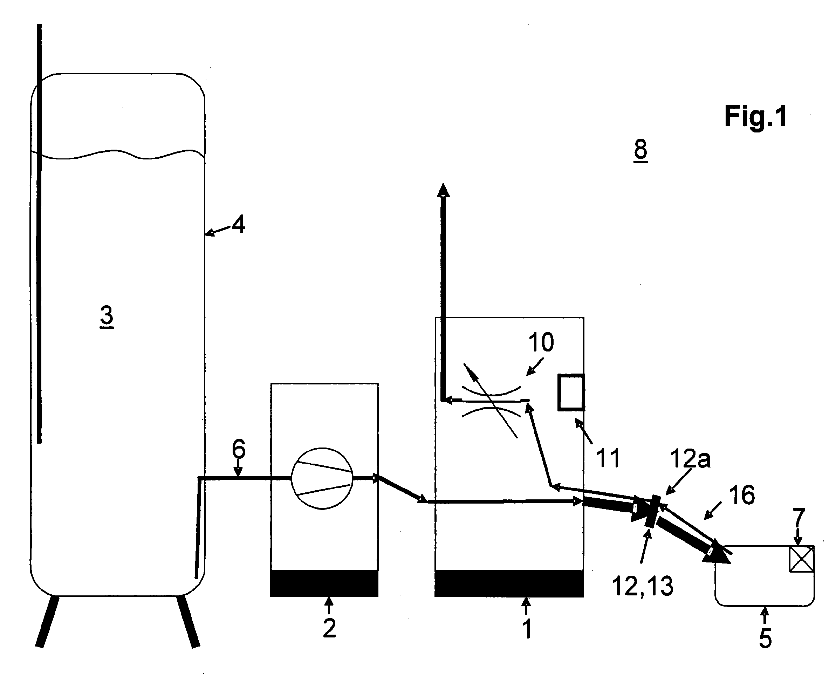

In the figures, in which the same reference numerals generally denote the same objects, a system for filling a storage system with a cryogenic liquid is shown in figure 1. Filling station 1 has a fluid connection to a feed pump 2, namely a cryo pump, whereby the feed pump 2 pumps a cryogenic liquid 3, in this case liquid hydrogen, from storage container 4 to storage system 5 via a pipe 6.

Storage system 5 comprises two spaced-apart cylinders (not shown) made of stainless steel having a vacuum in between them. It can accommodate 4.6 kg of liquid hydrogen and serves as a tank for a motor vehicle. When in use it is operated at a constant pressure of e.g. 4 bar. During long-term parking the hydrogen pressure in the inner cylinder rises until a release valve 7 called "boil-off valve" opens at a certain pressure of e.g. 7 bar and releases evaporated cryogenic liquid into the atmosphere 8. In case of a fault in the release valve 7 a shut-off valve (not shown) opens at e.g. 10 bar.

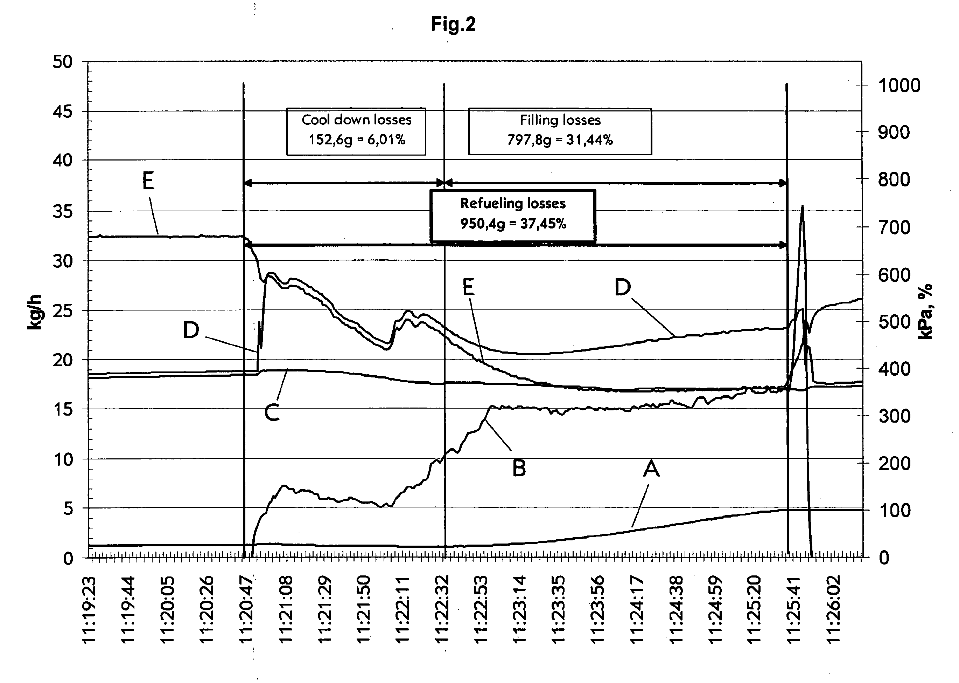

Figure 2 shows measurement values obtained during a filling process of storage system 5 by the system shown in figure 1. All measurement values are laid of as ordinate, whereby the horizontal axis denotes the time. The individual curves A to E represent the following quantities:
- A: the filling level within the storage system 1 in percent of the maximum filling level, plotted vs. right ordinate
- B: losses of hydrogen in kg/h, plotted vs. left ordinate
- C: the output pressure of the storage container in kPa, plotted vs. right ordinate
- D: the output pressure of the pump in kPa, plotted vs. right ordinate
- E: the gas pressure on the storage system in kPa, plotted vs. right ordinate

Prior to a filling process illustrated with the help of the figures which follow, the filling station 1 and the storage system 5 were cooled down by another filling process. They could be regarded to be "cold" when the measurement started.

The filling process started at time t1 and stopped at time t2, when the filling level of the storage system reached 85% of the total inner volume, i.e. when the tank is defined to be completely refuelled. The filling time was 4 min 46 sec, which is subdivided into a cool-down period of 1 min 31 sec between t1 and time tc and a filling period of 3 min 14 sec between tc and t2. The filling time is defined to start when the filling level in storage system 5 increases.

In the cool-down period liquid hydrogen 3 was pumped by feed pump 2 into storage system 5. The return gas valve 10 was relatively wide open, like a static orifice, and remained unchanged during the filling process. The output pressure of the feed pump 2 was set to 4 bar. The chosen value of the output pressure is significantly below the release pressure (boil-off pressure) of 7 bar determined by the choice of the release valve 7 in storage system 5. Figure 2 thus shows the results of a refuelling process without using the present invention. Liquid hydrogen evaporated and was conducted via a gas pipe 16 to the filling station 1 and from there to the return gas valve 10. Gas pipe 16 is separate from and parallel to pipe 6. Losses totalled 37.45 % of usable cryogenic mass in the storage tank, of which 6.01 % derived from the cool-down period and 31.44 % from the filling period.

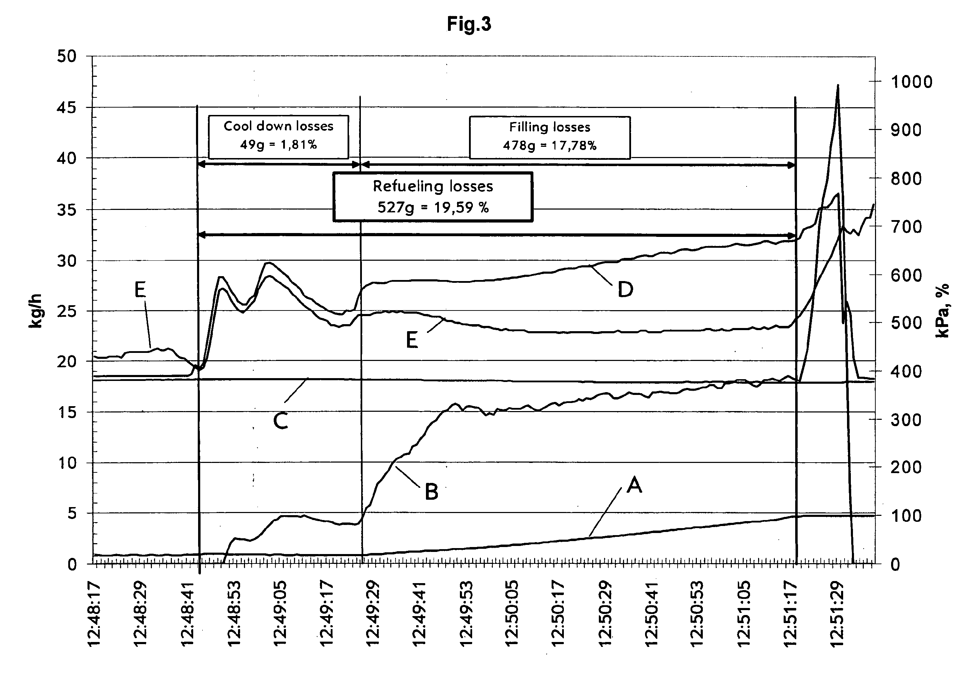

Figure 3 shows measurement values from a refuelling process under the same conditions and with the same parameters as in figure 2. However, in this refuelling process the invention was used. For that purpose, the output pressure of the pump was set to 6 bar. The safety margin to the release pressure was estimated to be 1 bar. Again, the return gas valve 10 was in the same position and remained unchanged during the filling process.

A first difference to the situation of figure 2 is that for filling the storage system 5 less time is needed. The total filling time is 2 min 36 sec, whereby the cool-down period is 50 sec and the filling time is 1 min 46 sec. The cool-down period is shorter because the higher output pressure leads to a turbulent flow of cryogenic liquid through the pipe 6. A much higher mass flow of cryogenic liquid is the consequence. This leads to a shorter transport time of cryogenic liquid to the storage vessel. The high pressure of the cryogenic liquid serves as buffer for friction losses. Less evaporation is the consequence. The filling process is faster as well, because the instant condensation of the evaporated hydrogen by the sub-cooled liquid hydrogen avoids a time-consuming replacement of gaseous hydrogen by new liquid hydrogen. As a result, total losses of hydrogen decreased to 19.59 % of usable cryogenic mass in the storage tank, of which 1.81 % derived from the cool-down period and 17.7 % from the filling period.

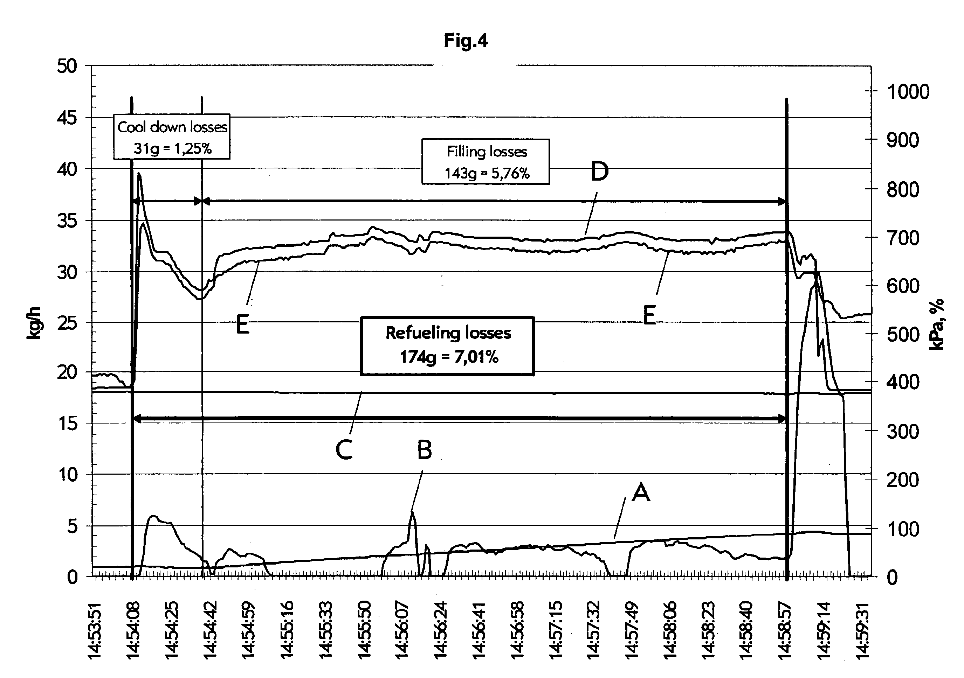

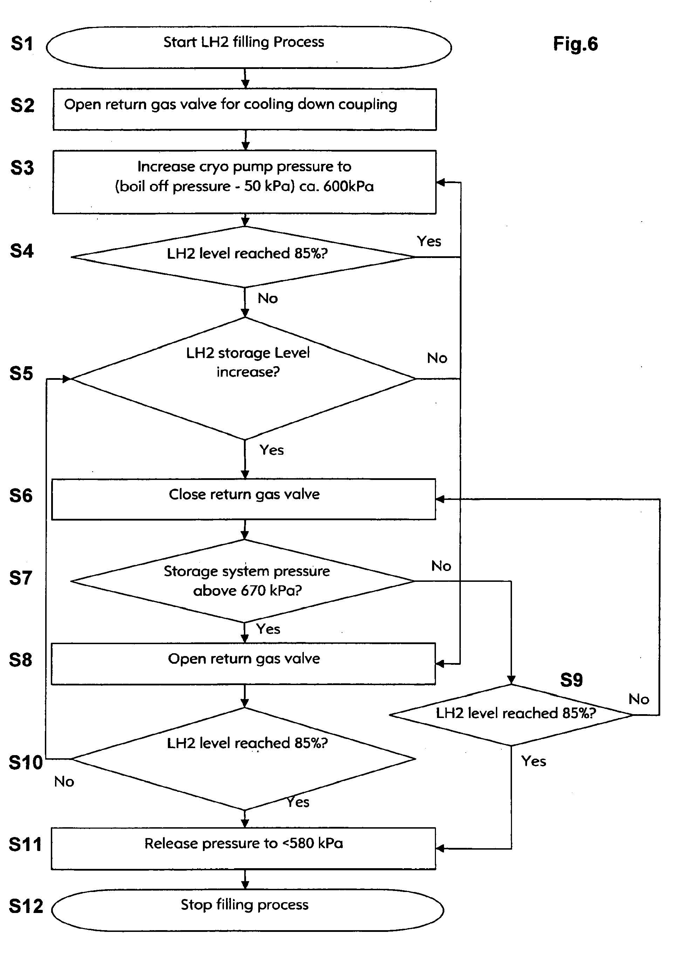

Figure 4 shows measurement values from a third filling process during which the output pressure of the feed pump 2 and the flow rate through the return gas valve 10 were controlled by using measurement values from storage system 5. These measurement values were the gas pressure and the filling level in the storage system 5. Details of the filling process will be discussed below with the help of the flowchart shown in figure 6.

As a test setup was used, the control was performed manually, although the man skilled in the art will easily understand that this control can be done more comfortably by the data processing system 11 of filling station 1. In this case the data processing system 11 dynamically adjusts the output pressure of the feed pump 2. It then receives its data electronically via a data interface 12, which might be integrated into the LH2 (=liquid H2)-coupling 13. The losses were reduced to only 7.01 % of usable cryogenic mass in the storage tank, of which 1.25 % derived from the cool-down period and 5.76 % from the filling period.

It turned out that it is possible to avoid losses through the return gas valve 10 by closing it completely or intermittently, e.g. during the time interval tₛₕᵤₜ, so long as the gas pressure in storage system 5 is safely below the release pressure of 7 bar.

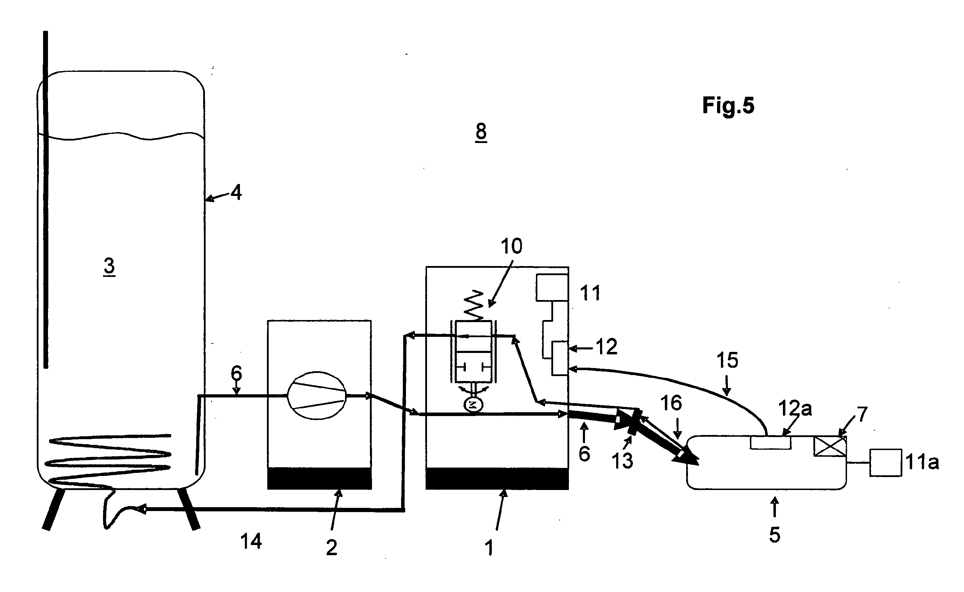

Figure 5 shows another embodiment of a system for filling a storage system 5 with a cryogenic liquid 3. When compared to the embodiment of figure 1 there is an additional return gas pipe 14 from filling station 1 to storage container 4. In this case losses of hydrogen to the atmosphere 8 are zero. However, it remained in filling station 1 for improved security. Furthermore, there is a data connection 15, e.g. a cable or a wireless link, to a data interface 12, from which data processing system 11 obtains its data (not shown for sake of simplicity). The position of the data interface 12 is an alternative to the position shown in figure 1.

Figure 6 shows a flowchart illustrating the method by which the data processing system 11 can control the flow rate through the return gas valve 10 and can control the output pressure of feed pump 2 in response to measurement values obtained from storage system 5 via data interfaces 12 or 12a.

The method starts with step S1. In step S2 the return gas valve 10 in filling station 1 is completely opened at time t1. This is done to achieve a fast cooling-down period [t1, tc].

In step S3 the output pressure of the feed pump 2 is set to the release pressure of release valve 7 of storage system 5 minus 50 kPa, i.e. 650 kPa.

In step S4 it was checked whether the LH2 level in storage system 5 had already reached 85% of the maximum. If the answer was yes, i.e. the storage system 5 was already full, the method proceeded with step S8. If the answer was no the method proceeded with step S5. In the latter case the filling process had to go on.

In step S5 it was checked whether the LH2 filling level in storage system 5 had increased. If the answer was yes the method proceeded with step S6. If the answer was no, the method proceeded with step S3 and the output pressure of the feed pump 2 was increased to speed up the cool-down process.

In step S6 the return gas valve 10 was closed, because the LH2 filling level already increased, cf. step S5. In this situation hydrogen gas was recondensed by the sub-cooled liquid hydrogen. As a consequence, there was less evaporation of liquid hydrogen and it was possible to close the return gas valve 10 of filling station 1.

In step S7 it was checked whether the gas pressure in storage system 5 was above a threshold value, in this case above 670 kPa. This might have been the case because the return gas valve 10 was closed in step S6. If the answer was yes the return gas valve 10 was opened again in order to avoid an opening of release valve 7. If the answer was no the gas pressure was not too high and the method proceeded with step S9. If the answer was yes, the method proceeded with step S8.

In step S8 the return gas valve 10 was opened again as the gas pressure in storage system 5 was above the threshold value as discussed above.

In step S9 it was checked whether the filling level in storage system 5 had already reached 85% of its maximum. If the answer was no the filling process had to go on and the method proceeded with step S6. It could thus be afforded to close the return gas valve 10 as the gas pressure was not too high. If the answer was yes the method proceeded with step S11.

In step S10 it was checked whether the filling level in storage system 5 had already reached 85% of its maximum. If the answer was yes the output pressure of feed pump 2 was decreased in step S11 and the filling method stopped with step S12. If the answer was no the method proceeded with step S5.

Although particular embodiments of the invention have been described, it should be understood that these are not intended to limit the invention to the particular from disclosed, but, on the contrary, the invention covers all modifications, embodiments, equivalents and alternatives falling within the scope of the claimed invention.

### List of reference numerals

- 01: filling station
- 02: feed pump
- 03: cryogenic liquid
- 04: storage container
- 05: storage system
- 06: pipe
- 07: release valve
- 08: atmosphere
- 10: return gas valve
- 11: data processing system
- 11a: data processing system
- 12: data interface
- 12a: data interface
- 13: coupling
- 14: return gas pipe
- 15: data connection

- t1: time (start of filling process)
- t2: time (end of filling process)
- tc: time (start of filling time)

- t(shut): time interval during which the release valve is closed
- LH2: liquid hydrogen

## Claims

1. Filling station (1) for filling a cryogenic liquid (3) into a storage system (5) by means of a feed pump (2), the filling station comprising a data processing system (11) which is adapted to dynamically adjust the output pressure of the feed pump.

2. Filling station according to claim 1, whereby the data processing system (11) is adapted to request the release pressure and/or measurement values from the storage system.

3. Filling station according to any of the preceding claims, the data processing system being adapted to control the output pressure of the feed pump in response to measurement values received from the storage system.

4. Filling station according to any of the preceding claims, further comprising a dynamically adjustable return gas valve (10) for releasing evaporated cryogenic liquid into the atmosphere.

5. Filling station according to any of the preceding claims, whereby the data processing system is adapted to control the flow rate through the return gas valve in response to measurement values received from the storage system.

6. Filling station according to any of the preceding claims, whereby the data processing system is adapted to control the output pressure of the feed pump and/or the flow rate through the return gas valve in response to the filling level of the cryogenic liquid and the gas pressure in the storage system.

7. Filling station according to any of the preceding claims, further comprising a storage container (4) for storing the cryogenic liquid and a return gas pipe (14) between the storage system and the container.

8. Filling station according to any of the preceding claims, whereby the cryogenic liquid is hydrogen, nitrogen or helium.

9. Filling station according to any of the preceding claims, adapted to refuel the storage system of a motor vehicle.

10. Method of filling a storage system (5) with a cryogenic liquid (3), said method comprising the steps of
a) adjusting a feed pump (2) to an output pressure which is equal to a release pressure of a release valve of a storage system minus a safety margin,
b) pumping cryogenic liquid to the storage system by means of said feed pump.

11. Method according to claim 16, whereby the output pressure of the feed pump is dynamically adjusted.

12. Method according to any of the preceding claims, further comprising the step of requesting and/or receiving the release pressure of the storage system and/or measurement values from the storage system.

13. Method according to any of the preceding claims, further comprising the step of controlling the output pressure of the feed pump in response to measurement values received from the storage system.

14. Method according to any of the preceding claims, further comprising the step of controlling the flow rate through a return gas valve (10), the return gas valve serving for releasing evaporated cryogenic liquid into the atmosphere.

15. Method according to any of the preceding claims, whereby controlling the output pressure of the feed pump and/or controlling the flow rate through the return gas valve is carried out in response to the gas pressure and the filling level of the cryogenic liquid in the storage system.

16. Method according to any of the preceding claims, further comprising the step of conducting cryogenic liquid evaporated in the storage system to a container for storing the cryogenic liquid.

17. Method according to any of the preceding claims, whereby the storage system is filled with liquid hydrogen, liquid nitrogen or liquid helium.

18. A data processing program for execution in a data processing system comprising software code portions for performing a method according to any preceding method claim when said program is run on said system.

19. An electromagnetic signal modulated to carry data representing a data processing program according to claim 18.

20. A computer program product stored on a computer usable medium, comprising computer readable program means for causing a computer to perform a method according to any of the preceding method claims when said program is run on said computer.

## Amended claims

### Amended claims in accordance with Rule 137(2) EPC.

**1.** Filling station (1) for filling a cryogenic liquid (3) into a storage system (5) by means of a feed pump (2), the feed pump having an output pressure which is set to the release pressure of the storage system minus a safety margin, the filling station comprising a data processing system (11) which is adapted to dynamically adjust the output pressure of the feed pump.

**2.** Filling station according to claim 1, whereby the data processing system (11) is adapted to request the release pressure and/or measurement values from the storage system.

**3.** Filling station according to any of the preceding claims, the data processing system being adapted to control the output pressure of the feed pump in response to measurement values received from the storage system.

**4.** Filling station according to any of the preceding claims, further comprising a dynamically adjustable return gas valve (10) for releasing evaporated cryogenic liquid into the atmosphere.

**5.** Filling station according to any of the preceding claims, whereby the data processing system is adapted to control the flow rate through the return gas valve in response to measurement values received from the storage system.

**6.** Filling station according to any of the preceding claims, whereby the data processing system is adapted to control the output pressure of the feed pump and/or the flow rate through the return gas valve in response to the filling level of the cryogenic liquid and the gas pressure in the storage system.

**7.** Filling station according to any of the preceding claims, further comprising a storage container (4) for storing the cryogenic liquid and a return gas pipe (14) between the storage system and the container.

**8.** Filling station according to any of the preceding claims, whereby the cryogenic liquid is hydrogen, nitrogen or helium.

**9.** Filling station according to any of the preceding claims, adapted to refuel the storage system of a motor vehicle.

**10.** Method of filling a storage system (5) with a cryogenic liquid (3), said method comprising the steps of
a) adjusting a feed pump (2) to an output pressure which is equal to a release pressure of a release valve of a storage system minus a safety margin,
b) pumping cryogenic liquid to the storage system by means of said feed pump.

**11.** Method according to claim 16, whereby the output pressure of the feed pump is dynamically adjusted.

**12.** Method according to any of the preceding claims, further comprising the step of requesting and/or receiving the release pressure of the storage system and/or measurement values from the storage system.

**13.** Method according to any of the preceding claims, further comprising the step of controlling the output pressure of the feed pump in response to measurement values received from the storage system.

**14.** Method according to any of the preceding claims, further comprising the step of controlling the flow rate through a return gas valve (10), the return gas valve serving for releasing evaporated cryogenic liquid into the atmosphere.

**15.** Method according to any of the preceding claims, whereby controlling the output pressure of the feed pump and/or controlling the flow rate through the return gas valve is carried out in response to the gas pressure and the filling level of the cryogenic liquid in the storage system.

**16.** Method according to any of the preceding claims, further comprising the step of conducting cryogenic liquid evaporated in the storage system to a container for storing the cryogenic liquid.

**17.** Method according to any of the preceding claims, whereby the storage system is filled with liquid hydrogen, liquid nitrogen or liquid helium.

**18.** A data processing program for execution in a data processing system comprising software code portions for performing a method according to any preceding method claim when said program is run on said system.

**19.** An electromagnetic signal modulated to carry data representing a data processing program according to claim 18.

**20.** A computer program product stored on a computer usable medium, comprising computer readable program means for causing a computer to perform a method according to any of the preceding method claims when said program is run on said computer.
